# EUROPEAN PATENT APPLICATION

(11) **EP 2 728 469 A1**
(43) Date of publication of application: **07.05.2014**
(21) Application number: 13188357.1
(22) Date of filing: 11.10.2013
(51) Int. Cl.: G06F 9/455

(54) **Computing device and virtual machine accessing method**

(30) Priority: 30.10.2012 TW 101140189
(71) Applicant: Hon Hai Precision Industry Co., Ltd., New Taipei City (TW)
(72) Inventor: Lee, Chung-I, New Taipei (TW); Yeh, Chien-Fa, New Taipei (TW); Lu, Chiu-Hua, New Taipei (TW); Yen, Tsung-Hsin, New Taipei (TW); Lin, Chien-Chih, New Taipei (TW)
(74) Representative: Gray, John James

(57) **Abstract**

In a virtual machine (VM) accessing method, a computing device obtains instantaneous information of a virtual machine in the computing device (S301). The instantaneous information of the virtual machine is converted into a format supported by webpages (S302). The computing device provides the converted instantaneous information of the virtual machine to a web server connected to the computing device (S303), so that a client computer connected to the web server can access the virtual machine.

## Description

### Field

Embodiments of the present disclosure relate to virtual machine technology, and particularly to a computing device and a virtual machine accessing method of the computing device.

### BackGround

A physical machine such as a server can have a number of virtual machines (VMs) installed for providing multiple services to users. However, certain dedicated applications need to be installed in client computers to access the virtual machines, and the dedicated applications vary for different operating systems of the client computers. Therefore, it is inconvenient to access the virtual machines when the client computers are installed with different operating systems.

### Summary

According to one aspect of the disclosure, a virtual machine accessing method is provided. The virtual machine accessing method includes: obtaining instantaneous information of a virtual machine in a computing device; converting the instantaneous information of the virtual machine into a format supported by webpages; and providing the converted instantaneous information of the virtual machine to a web server connected to the computing device.

### BRIEF DESCRIPTION OF THE DRAWINGS

Embodiments of the invention are described, by way of example only, with reference to the accompanying drawings, in which:

FIG. 1 is one embodiment of an application of a computing device including a virtual machine (VM) accessing system.

FIG. 2 is a block diagram of one embodiment of function modules of the VM accessing system in FIG. 1.

FIG. 3 is a flowchart of one embodiment of a virtual machine accessing method of the computing device of FIG. 1.

### DETAILED DESCRIPTION

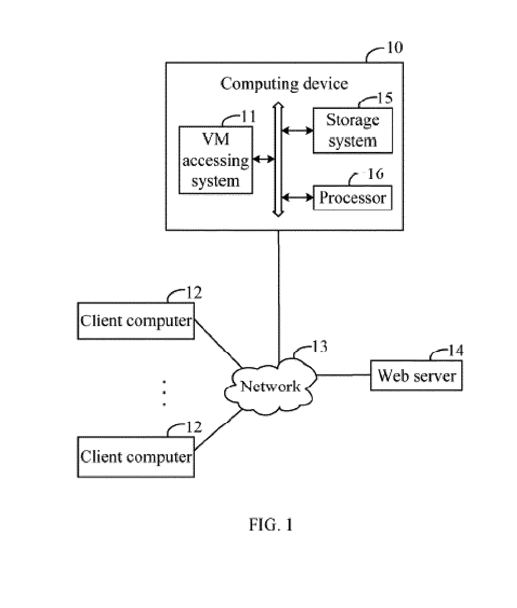

FIG. 1 is one embodiment of an application of a computing device 10 including a virtual machine (VM) accessing system 11. The computing device 10 is connected to a plurality of client computers 12 and a web server 14 through a network 13. One or more virtual machines (not shown) are installed in the computing device 10 to provide services (e.g., computing services) to users. Each of the client computers 12 includes a web browser (not shown). The VM accessing system 11 allows the client computers 12 to access the virtual machines without installing any specialized application. The network 13 can be a public network or a private network.

In this embodiment, the computing device 10 further includes a storage system 15 and at least one processor 16. The storage system 15 can be a dedicated memory, such as an erasable programmable read-only memory (EPROM), a hard disk drive (HDD), or flash memory. In some embodiments, the storage system 15 can be an external storage device, such as an external hard disk, a storage card, or a data storage medium.

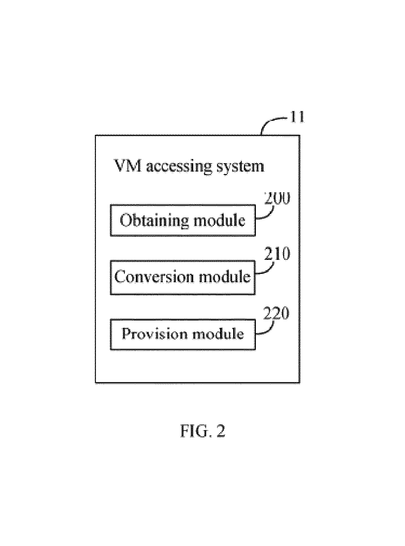

FIG. 2 is a block diagram of one embodiment of function modules of the VM accessing system 11 in FIG. 1. The VM accessing system 11 includes an obtaining module 200, a conversion module 210, and a provision module 220. The modules 200-220 can comprise computerized code in the form of one or more programs that are stored in the storage system 15. The computerized code includes instructions that are executed by the processor 16, to provide the aforementioned functions of the VM accessing system 11. Detailed descriptions of the functions of the modules 200-220 are explained in the following descriptions of a VM accessing method of the computing device 10.

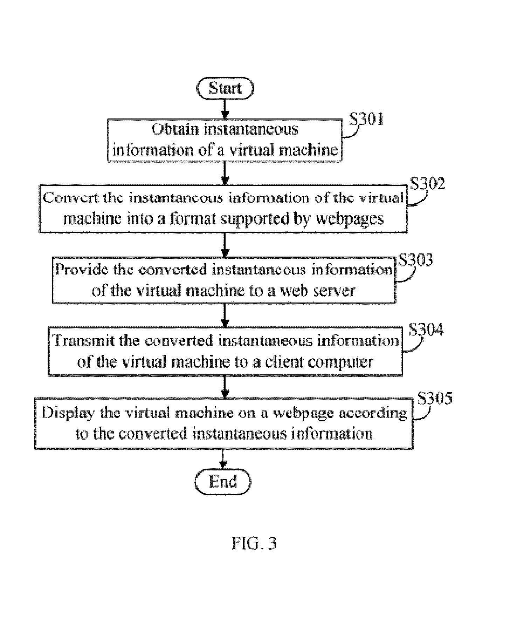

FIG. 3 is a flowchart of one embodiment of a VM accessing method of the computing device 10 of FIG. 1. Depending on the embodiment, additional steps can be added, others removed, and the ordering of the steps can be changed.

In step S301, the obtaining module 200 obtains instantaneous information of a virtual machine in the computing device 10. The instantaneous information of the virtual machine includes instantaneous image information and instantaneous sound information of the virtual machine. The instantaneous image information is used to display an instantaneous image of a screen of the virtual machine. The instantaneous sound information is used to play an instantaneous sound of the virtual machine.

In step S302, the conversion module 210 converts the instantaneous information of the virtual machine into a format supported by webpages. In one embodiment, the conversion module 210 adds tags (e.g., HTML tags) to the instantaneous information. For example, the conversion module 210 adds video tags to the instantaneous image information and adds audio tags to the instantaneous sound information. In accordance with the instantaneous image information and the video tags, an instantaneous image of the screen of the virtual machine is displayed on a webpage. In accordance with the instantaneous sound information and the audio tags, an instantaneous sound of the virtual machine is played on the webpage. In one embodiment, the conversion module 210 compresses the instantaneous information of the virtual machine before converting the instantaneous information into the format supported by webpages.

In step S303, the provision module 220 provides the converted instantaneous information of the virtual machine to the web server 14. In this embodiment, the provision module 220 provides the converted real-time image information and the converted real-time sound information of the virtual machine to the web server 14.

In step S304, the web server 14 receives a VM access request from a client computer 12 and transmits the converted instantaneous information of the virtual machine to the client computer 12 in response to the VM access request. In one embodiment, the client computer 12 submits the VM access request via the web browser. In response to the VM access request, the web server 14 transmits the converted instantaneous information to the web browser of the client computer 12.

In step S305, the client computer 12 receives the converted instantaneous information from the web server 14, and uses the web browser to display the virtual machine on a webpage according to the converted instantaneous information. In one embodiment, the webpage displays the instantaneous image of the screen of the virtual machine and plays the instantaneous sound of the virtual machine.

In one embodiment, if instantaneous information of the virtual machine received from the computing device 10 is not supported by a webpage, the client computer 12 converts the instantaneous information into a format that is supported by the webpage, and provides the converted instantaneous information to the web server 14. Therefore, other client computers 12 can access the virtual machines without installing any specialized application according to the converted instantaneous information.

While specific embodiments of the invention have been described above, it is to be understood that the embodiments described herein can be implemented in hardware, software, firmware, middleware, microcode, or any combination thereof. For example, the invention may take the form of a computer program containing one or more sequences of machine-readable instructions which, when executed by a computer, causes the computer to perform one or more method described above.

When the embodiments are implemented in software, firmware, middleware or microcode, program code or code segments, they can be stored in a machine-readable medium, such as a storage component. The term "machine-readable medium" can include, without being limited to, wireless channels and various other media capable of storing, containing, and/or carrying instruction(s) and/or data. A code segment can represent a procedure, a function, a subprogram, a program, a routine, a subroutine, a module, a software package, a class, or any combination of instructions, data structures, or program statements. A code segment can be coupled to another code segment or a hardware circuit by passing and/or receiving information, data, arguments, parameters, or memory contents. Information, arguments, parameters, data, etc. can be passed, forwarded, or transmitted using any suitable means including memory sharing, message passing, token passing, network transmission, etc. For a software implementation, the techniques described herein can be implemented with modules (e.g., procedures, functions, and so on) that perform the functions described herein. The software codes can be stored in memory units and executed by processors. The memory unit can be implemented within the processor or external to the processor, in which case it can be communicatively coupled to the processor via various means as is known in the art.

For a hardware implementation, the processing units can be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a combination thereof. All of the processes described above may be embodied in, and fully automated via, functional code modules executed by one or more general purpose electronic devices or processors. The code modules may be stored in any type of non-transitory machine-readable medium or other storage device. Some or all of the methods may alternatively be embodied in specialized hardware. Depending on the embodiment, the non-transitory machine-readable medium may be a hard disk drive, a compact disc, a digital video disc, a tape drive or other suitable storage medium.

It should be emphasized that the above-described embodiments of the present disclosure, particularly, any embodiments, are merely possible examples of implementations, merely set forth for a clear understanding of the principles of the disclosure. Many variations and modifications may be made to the above-described embodiment(s) of the disclosure without departing substantially from the spirit and principles of the disclosure. All such modifications and variations are intended to be included herein within the scope of this disclosure and the present disclosure and protected by the following claims.

## Claims

1. A virtual machine accessing method being executed by a processor of a computing device, the method comprising:
obtaining instantaneous information of a virtual machine in the computing device;
converting the instantaneous information of the virtual machine into a format supported by webpages; and
providing the converted instantaneous information of the virtual machine to a web server connected to the computing device.

2. The method of claim 1, wherein the instantaneous information of the virtual machine comprises instantaneous image information and instantaneous sound information of the virtual machine.

3. The method of claim 1 or 2, wherein the instantaneous information of the virtual machine is compressed before the instantaneous information is converted into the format supported by webpages.

4. The method of claim 1, 2 or 3, wherein the instantaneous information is converted into the format supported by webpages by adding tags to the instantaneous information.

5. The method of any preceding claim, wherein one or more client computers receive the converted instantaneous information from the web server and display the virtual machine on the webpage according to the converted instantaneous information.

6. A computing device, comprising:
at least one processor; and
a storage system storing a plurality of instructions, which when executed by the at least one processor, cause the at least one processor to:
obtain instantaneous information of a virtual machine in the computing device; convert the instantaneous information of the virtual machine into a format supported by webpages; and
provide the converted instantaneous information of the virtual machine to a web server connected to the computing device.

7. The computing device of claim 6, wherein the instantaneous information of the virtual machine comprises instantaneous image information and instantaneous sound information of the virtual machine.

8. The computing device of claim 6 or 7, wherein the instantaneous information of the virtual machine is compressed before the instantaneous information is converted into the format supported by webpages.

9. The computing device of claim 6, 7 or 8, wherein the instantaneous information is converted into the format supported by webpages by adding tags to the instantaneous information.

10. The computing device of claim 6, 7, 8 or 9, wherein one or more client computers receive the converted instantaneous information from the web server and display the virtual machine on a webpage according to the converted instantaneous information.

11. A storage medium having stored thereon instructions that, when executed by a processor of a computing device, causes the processor to perform a virtual machine accessing method as claimed in any of claims 1 to 5.
